# DEMANDE DE BREVET EUROPEEN

(11) **EP 3 473 408 A1**
(43) Date de publication de la demande: **24.04.2019**
(21) Numéro de dépôt: 18200868.0
(22) Date de dépôt: 17.10.2018
(51) Int. Cl.: B29C 63/00

(54) **PROCÉDÉ DE GAINAGE DE LA FACE CONVEXE DE PIÈCE DE FORME NON DÉVELOPPABLE PAR UN FILM THERMOPLASTIQUE**

(30) Priorité: 20.10.2017 FR 1759890
(71) Demandeur: Stelia Aerospace Composites, 33160 Salaunes (FR)
(72) Inventeur: SCHAEFFNER, Patrice, 33160 Saint Medard en Jalles (FR)
(74) Mandataire: Ipside

(57) **Abrégé**

La présente invention se rapporte à un procédé de gainage de la forme convexe d'une pièce (10) possédant une forme externe convexe, ledit procédé comportant les étapes suivantes :
- Une étape durant laquelle un film (11) thermoplastique est formé à une température comprise entre 70° C et 140° C sur un outillage matrice (12) de forme concave ;
- Une étape durant laquelle ledit film (11) thermoplastique est appliqué sur la forme externe convexe de ladite pièce (10) ; et
- Une étape durant laquelle ledit film (11) thermoplastique est adhéré à la pièce (10).

## Description

### Domaine de l'invention

La présente invention se rapporte au domaine des pièces de forme non développable décorées par un film thermoplastique appliqué sur la face convexe par pression ou dépression, en température ou non, plus particulièrement, mais pas exclusivement au domaine des pièces d'aménagement intérieur cabine et cockpit d'aéronef. Les pièces d'aménagement intérieur décorées par un film thermoplastique sont largement utilisées dans le domaine aéronautique pour constituer, en particulier, des panneaux décorés, des meubles, fauteuils et coques de fauteuil.

La présente invention ne se limite pas à l'aéronautique et pourrait s'appliquer à tout domaine dans lequel les pièces sont décorées par un film thermoplastique (bâtiment, automobile, nautique, sport & loisirs, etc...).

### Etat de la technique

Classiquement, de telles pièces sont décorées sur leurs surfaces planes ou faces concaves par application d'un film décor thermoplastique enduit sur une face d'un adhésif à froid ou d'un adhésif activable à chaud et sous application d'une pression ou d'une dépression.

Les films utilisés pour décorer une pièce présentent une face de couleur unie ou décorée de divers motifs. Ces films peuvent également être texturés suivant différents motifs. Ces films sont constitués de plusieurs couches de thermoplastique et sont déformables à chaud. La face de ces films opposée au décor peut être enduite d'un adhésif à froid sensible à la pression ou activable à chaud.

Un procédé de fabrication conventionnel pour appliquer ces films consiste à positionner la pièce sur un outillage, le film entre la pièce à décorer et une vessie déformable. La face décorée est opposée à la pièce, la face à coller est sur la pièce. Puis le procédé consiste à appliquer une chaleur sur la surface de l'ensemble et enfin appliquer une dépression entre l'outillage et la vessie. Le film est alors déformé sous l'action conjointe de la pression atmosphérique exercée sur la vessie et la chaleur. La colle est activée par l'effet de la chaleur.

Ce procédé de fabrication ne permet de déformer le film que dans le sens de son étirement sur des formes planes ou concaves. L'utilisation de ce procédé ne permet pas de déformer le film sur des formes convexes sans apparition de plis. La présence de pli ne répond pas aux exigences esthétiques de ce type de pièce.

Une méthode pour limiter l'apparition de pli sur formes convexes consiste à utiliser des sangles élastomériques ou équivalents qui permettent dans une faible mesure d'appliquer une tension au film permettant de façon limitée de développer le film sur une forme convexe proche de sa forme développable sans apparition de pli.

Un second procédé de fabrication conventionnel pour appliquer ces films consiste à appliquer manuellement le film directement sur la pièce. Le film peut être déformé manuellement par l'application d'un air pulsé chauffé. L'adhésion peut être augmentée par l'ajout d'un primaire de surface.

Ce second procédé de fabrication est une opération manuelle difficilement répétable et industrialisable. Il présente des risques importants d'apparition de défaut, comme par exemple : présence de pli, texture lissée, blanchiment de la matière, déchirure, bulle, décollement, etc...

De nombreux brevets et de nombreuses demandes de brevet traitent du procédé de thermoformage de film thermoplastique fin de pièce de forme complexe.

Le décor de type film thermogainé pour les pièces d'aménagement intérieur aéronautique est de plus en plus sollicité par les compagnies aériennes. En parallèle, les pièces d'aménagement intérieur aéronautique présentent des formes design de plus en plus arrondies et non développables.

Les exigences esthétiques de telle pièce imposent un dépôt de film sans marque, sans défaut de texture, sans défaut d'aspect et sur des formes de plus en plus complexes.

### Exposé de l'invention

La présente invention entend remédier aux inconvénients de l'art antérieur en proposant un procédé de gainage d'une pièce de forme convexe décorée sur sa surface externe par dépôt d'un film thermoplastique multicouche.

A cet effet, la présente invention concerne, dans son acception la plus générale, un procédé de gainage de la forme convexe d'une pièce possédant une forme externe convexe, ledit procédé comportant les étapes suivantes :
- Une étape durant laquelle un film thermoplastique est formé à une température comprise entre 70° C et 140° C sur un outillage matrice de forme concave ;
- Une étape durant laquelle ledit film thermoplastique est appliqué sur la forme externe convexe de ladite pièce ; et
- Une étape durant laquelle ledit film thermoplastique est adhéré à la pièce.

Selon un mode de réalisation, ledit film thermoplastique est appliqué par dépression sur la forme externe convexe de ladite pièce.

Selon un autre mode de réalisation, ledit film thermoplastique est appliqué par pression sur la forme externe convexe de ladite pièce.

Selon une variante, ledit film thermoplastique est appliqué sur la forme externe convexe de ladite pièce à température ambiante.

Selon une autre variante, ledit film thermoplastique est appliqué sur la forme externe convexe de ladite pièce à une température plus élevée que la température ambiante.

Selon un mode de réalisation, ledit film thermoplastique est adhéré à la pièce par l'intermédiaire d'un adhésif activable à chaud.

Selon un autre mode de réalisation, ledit film thermoplastique est adhéré à la pièce par l'intermédiaire d'un adhésif sensible à la pression.

Selon un mode de réalisation, ledit film est découpé à la longueur nécessaire, est déroulé sur les contours dudit outillage matrice sans déformation et une face décor dudit film est positionnée contre ledit outillage matrice.

Selon une variante, l'étanchéité entre ledit film et ledit outillage matrice est assurée par un système de joint.

Selon une autre variante, l'étanchéité entre ledit film et ledit outillage matrice est assurée par un ruban auto-adhésif.

Selon un mode de réalisation, ledit film est chauffé par un équipement chauffant par air pulsé, à une température comprise entre 70° C et 140° C.

Selon un autre mode de réalisation, ledit film est chauffé par un équipement chauffant par panneau radiant UV ou IR, à une température comprise entre 70° C et 140° C.

Selon un mode de réalisation, ledit film conserve la forme dudit outillage matrice, est détouré, puis est retiré dudit outillage matrice de formage.

Selon un mode de réalisation, ladite pièce est préparée et déposée sur un outillage support.

Selon un mode de réalisation, ladite pièce est enduite d'une colle sur toute sa surface pour permettre l'adhésion dudit film.

Selon un mode de réalisation, ledit film est enduit d'une colle activable à chaud ou sensible à la pression ou colle dite contact.

Selon un mode de réalisation, ledit film est déposé face à coller sur la surface externe convexe de la pièce à décorer.

Selon un mode de réalisation, ledit film est détouré et la pièce ainsi décorée est retirée dudit outillage support.

Selon une variante, ladite pièce est recouverte d'un sac, d'une vessie ou d'une contre-forme rigide ou souple.

### Brève description des dessins

On comprendra mieux l'invention à l'aide de la description, faite ci-après à titre purement explicatif, d'un mode de réalisation de l'invention, en référence aux Figures dans lesquelles :
- La Figure 1 représente les différentes étapes du procédé selon la présente invention ;
- Les Figures 2A et 2B illustrent la première étape du procédé selon la présente invention ;
- La Figure 3 illustre la seconde étape du procédé selon la présente invention ;
- La Figure 4 représente la troisième étape du procédé selon la présente invention ;
- Les Figures 5A et 5B illustrent la quatrième étape du procédé selon la présente invention ;
- Les Figures 6A et 6B représentent la cinquième étape du procédé selon la présente invention ;
- La Figure 7 illustre l'étape 4bis du procédé selon la présente invention ;
- La Figure 8 représente l'étape 5bis du procédé selon la présente invention ;
- La Figure 9 illustre l'étape 6bis du procédé selon la présente invention ; et
- La Figure 10 représente l'étape 7bis du procédé selon la présente invention.

### Description détaillée de modes de réalisation de l'invention

La présente invention concerne un procédé de gainage d'une pièce 10 de forme convexe décorée sur sa surface externe par dépôt d'un film 11 thermoplastique multicouche.

La présente invention se rapporte plus particulièrement à un procédé de gainage de la forme convexe d'une pièce 10 possédant une forme externe convexe, ledit procédé comportant les étapes suivantes :
- Une étape durant laquelle un film 11 thermoplastique est formé à une température comprise entre 70° C et 140° C sur un outillage matrice 12 de forme concave ;
- Une étape durant laquelle ledit film 11 thermoplastique est appliqué sur la forme externe convexe de ladite pièce 10 ; et
- Une étape durant laquelle ledit film 11 thermoplastique est adhéré à la pièce 10.

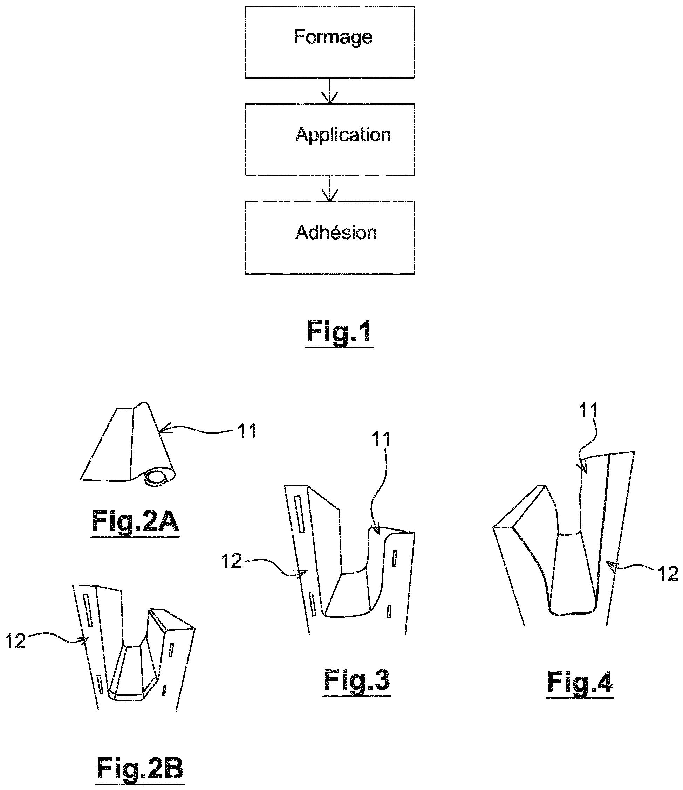

La Figure 1 représente les différentes étapes du procédé selon la présente invention.

Dans un mode de réalisation, ledit film 11 thermoplastique est appliqué par dépression sur la forme externe convexe de ladite pièce 10.

Dans un autre mode de réalisation, ledit film 11 thermoplastique est appliqué par pression sur la forme externe convexe de ladite pièce 10.

Dans un mode de réalisation, ledit film 11 thermoplastique est appliqué sur la forme externe convexe de ladite pièce 10 à température ambiante.

Dans un autre mode de réalisation, ledit film 11 thermoplastique est appliqué sur la forme externe convexe de ladite pièce 10 à une température plus élevée que la température ambiante.

Dans un mode de réalisation, ledit film 11 thermoplastique est adhéré à la pièce par l'intermédiaire d'un adhésif activable à chaud.

Dans un mode de réalisation, ledit film 11 thermoplastique est adhéré à la pièce par l'intermédiaire d'un adhésif sensible à la pression.

Le film 11 thermoplastique est multicouche, et est présenté sous format de plaque ou de rouleau enduit d'adhésif sensible à la pression ou activable à chaud. Plusieurs références commerciales sont proposées, par exemple pour SCHNELLER (marque déposée) les références AERFILM (marque déposée), AERLAM (marque déposée), AERFLEX (marque déposée), pour ISOVOLTA (marque déposée) les références AIRDEC (marque déposée), ou tout autre fournisseur de film thermoplastique.

L'outillage matrice 12 concave de formage du film 11 est représentatif de la forme externe convexe de la pièce 10 à décorer.

Dans une première étape : le film 11 est découpé à la longueur nécessaire. Le film 11 est déroulé sur les contours de l'outillage 12 sans déformation. La face décor du film 11 est positionnée contre l'outillage 12. L'étanchéité entre le film 11 et l'outillage 12 est assurée par un système de joint ou ruban auto-adhésif ou tout autre système d'étanchéité.

Les Figures 2A et 2B illustrent la première étape du procédé selon la présente invention.

Dans une seconde étape : le film 11 est chauffé par un équipement chauffant, par exemple par air pulsé, par panneau radiant UV ou IR, ou toute autre source de chaleur à une température comprise entre 70°C et 140°C. Puis le film 11 est déformé sur la surface interne de l'outillage 12 par l'application d'une dépression entre l'outillage 12 et le film 11 décor. Le film 11 est maintenu plaqué contre l'outillage 12 jusqu'au retour à la température ambiante.

La Figure 3 illustre la seconde étape du procédé selon la présente invention.

Dans une troisième étape : le film 11 conserve la forme de l'outillage matrice 12. Le film 11 est détouré et peut être retiré de l'outillage matrice 12 de formage.

La Figure 4 représente la troisième étape du procédé selon la présente invention.

Dans une quatrième étape, la pièce 10 est préparée et déposée sur un outillage support. La pièce 10 peut être enduite d'une colle sur toute la surface pour permettre l'adhésion du film 11. Le film 11 peut lui-même être enduit d'une colle activable à chaud ou sensible à la pression ou colle dite contact. Cette étape d'enduction de la colle activable à chaud est généralement réalisée initialement, et non lors de cette quatrième étape. Le film 11 précédemment formé est déposé face à coller sur la face externe convexe de la pièce 10 à décorer. L'étanchéité entre le film 11 et l'outillage 12 est assurée par un système de joint ou ruban auto-adhésif ou tout autre système d'étanchéité.

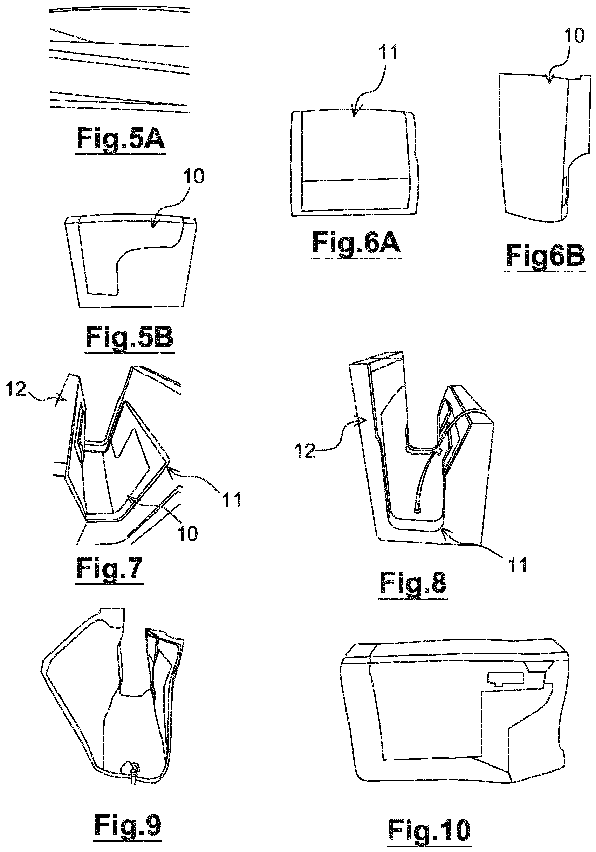

Les Figures 5A et 5B illustrent la quatrième étape du procédé selon la présente invention.

Dans une cinquième étape, le film 11 est collé sur la surface de la pièce 10 par application d'une pression ou d'une dépression entre un outillage poinçon et le film 11. Le film 11 peut être collé à la température ambiante ou à une température élevée jusqu'à 140°C. La pression du film 11 est appliquée jusqu'à l'adhésion complète du film 11 sur la pièce 10 à décorer. Le film 11 est détouré et la pièce 10 ainsi décorée retirée de l'outillage support.

Les Figures 6A et 6B représentent la cinquième étape du procédé selon la présente invention.

Une variante de réalisation consiste à ne déformer que les zones non-développables de la pièce 10 à décorer. Les zones développables ne nécessitent pas de déformation du film 11 (par exemple une forme cylindrique, ou deux plans présentant un angle constant ou non, etc..)

Une autre variante de réalisation est décrite ci-après à partir de la troisième étape décrite ci-dessus :
Etape 4 bis (variante de la quatrième étape décrite ci-dessus) : Le film 11 n'est pas retiré de l'outillage matrice 12. La pièce 10 est préparée et est déposée sur le film 11 dans l'outillage matrice 12 face à coller du film 11 sur la face externe convexe de la pièce 10 à décorer. La pièce 10 peut être enduite d'une colle sur toute la surface pour permettre l'adhésion du film 11. Le film 11 peut lui-même être enduit d'une colle activable à chaud ou sensible à la pression ou colle dite contact.

La Figure 7 illustre l'étape 4bis du procédé selon la présente invention.

Etape 5 bis (variante de la cinquième étape décrite ci-dessus): La pièce 10 est recouverte d'un sac, d'une vessie, ou d'une contre-forme rigide ou souple. L'étanchéité entre le film 11 décor et le sac, la vessie, ou la contre-forme rigide ou souple est assuré par un système de joint ou ruban auto-adhésif ou tout autre système d'étanchéité. Le film 11 est maintenu contre la pièce à décorer par l'application d'une dépression.

La Figure 8 représente l'étape 5bis du procédé selon la présente invention.

Etape 6 bis (variante de la sixième étape décrite ci-dessus) :
Le film 11 est détouré et l'ensemble film 11 décor et pièce 10 peuvent être retirés ou non de l'outillage matrice 12.

La Figure 9 illustre l'étape 6bis du procédé selon la présente invention.

Etape 7 bis (variante de la septième étape décrite ci-dessus) :
Le film 11 est collé sur la surface de la pièce 10 par application d'une pression ou d'une dépression entre le sac, la vessie, ou la contre-forme rigide ou souple et le film. Le film 11 peut être collé à la température ambiante ou à une température élevée jusqu'à 140°C. La pression du film 11 est appliquée jusqu'à l'adhésion complète du film 11 sur la pièce 10 à décorer. Le film 11 est détouré et la pièce 10 ainsi décorée retirée du sac, de la vessie, ou de la contre-forme rigide ou souple.

La Figure 10 représente l'étape 7bis du procédé selon la présente invention.

L'invention est décrite dans ce qui précède à titre d'exemple. Il est entendu que l'homme du métier est à même de réaliser différentes variantes de l'invention sans pour autant sortir du cadre du brevet.

## Revendications

1. Procédé de gainage de la forme convexe d'une pièce (10) possédant une forme externe convexe, **caractérisé en ce qu'**il comporte les étapes suivantes :
- Une étape durant laquelle un film (11) thermoplastique est formé à une température comprise entre 70° C et 140° C sur un outillage matrice (12) de forme concave ;
- Une étape durant laquelle ledit film (11) thermoplastique est appliqué sur la forme externe convexe de ladite pièce (10) ; et
- Une étape durant laquelle ledit film (11) thermoplastique est adhéré à la pièce (10).

2. Procédé de gainage de la forme convexe d'une pièce (10) selon la revendication 1, **caractérisé en ce que** ledit film (11) thermoplastique est appliqué par dépression sur la forme externe convexe de ladite pièce (10).

3. Procédé de gainage de la forme convexe d'une pièce (10) selon la revendication 1, **caractérisé en ce que** ledit film (11) thermoplastique est appliqué par pression sur la forme externe convexe de ladite pièce (10).

4. Procédé de gainage de la forme convexe d'une pièce (10) selon l'une des revendications 1, 2 ou 3, **caractérisé en ce que** ledit film (11) thermoplastique est appliqué sur la forme externe convexe de ladite pièce (10) à température ambiante.

5. Procédé de gainage de la forme convexe d'une pièce (10) selon l'une des revendications 1, 2 ou 3, **caractérisé en ce que** ledit film (11) thermoplastique est appliqué sur la forme externe convexe de ladite pièce (10) à une température plus élevée que la température ambiante.

6. Procédé de gainage de la forme convexe d'une pièce (10) selon l'une des revendications précédentes, **caractérisé en ce que** ledit film (11) thermoplastique est adhéré à la pièce par l'intermédiaire d'un adhésif activable à chaud.

7. Procédé de gainage de la forme convexe d'une pièce (10) selon l'une des revendications 1 à 5, **caractérisé en ce que** ledit film (11) thermoplastique est adhéré à la pièce par l'intermédiaire d'un adhésif sensible à la pression.

8. Procédé de gainage de la forme convexe d'une pièce (10) selon l'une des revendications précédentes, **caractérisé en ce que** ledit film (11) est découpé à la longueur nécessaire, est déroulé sur les contours dudit outillage matrice (12) sans déformation et **en ce qu'**une face décor dudit film (11) est positionnée contre ledit outillage matrice (12).

9. Procédé de gainage de la forme convexe d'une pièce (10) selon l'une des revendications précédentes, **caractérisé en ce que** l'étanchéité entre ledit film (11) et ledit outillage matrice (12) est assurée par un système de joint.

10. Procédé de gainage de la forme convexe d'une pièce (10) selon l'une des revendications 1 à 8, **caractérisé en ce que** l'étanchéité entre ledit film (11) et ledit outillage matrice (12) est assurée par un ruban auto-adhésif.

11. Procédé de gainage de la forme convexe d'une pièce (10) selon l'une des revendications précédentes, **caractérisé en ce que** ledit film (11) est chauffé par un équipement chauffant par air pulsé, à une température comprise entre 70° C et 140° C.

12. Procédé de gainage de la forme convexe d'une pièce (10) selon l'une des revendications 1 à 10, **caractérisé en ce que** ledit film (11) est chauffé par un équipement chauffant par panneau radiant UV ou IR, à une température comprise entre 70° C et 140° C.

13. Procédé de gainage de la forme convexe d'une pièce (10) selon l'une des revendications précédentes, **caractérisé en ce que** ledit film (11) conserve la forme dudit outillage matrice (12), est détouré, puis est retiré dudit outillage matrice (12) de formage.

14. Procédé de gainage de la forme convexe d'une pièce (10) selon l'une des revendications précédentes, **caractérisé en ce que** ladite pièce (10) est préparée et déposée sur un outillage support.

15. Procédé de gainage de la forme convexe d'une pièce (10) selon l'une des revendications précédentes, **caractérisé en ce que** ladite pièce (10) est enduite d'une colle sur toute sa surface pour permettre l'adhésion dudit film (11).

16. Procédé de gainage de la forme convexe d'une pièce (10) selon l'une des revendications précédentes, **caractérisé en ce que** ledit film (11) est enduit d'une colle activable à chaud ou sensible à la pression ou colle dite contact.

17. Procédé de gainage de la forme convexe d'une pièce (10) selon l'une des revendications précédentes, **caractérisé en ce que** ledit film (11) est déposé face à coller sur la surface externe convexe de la pièce (10) à décorer.

18. Procédé de gainage de la forme convexe d'une pièce (10) selon l'une des revendications précédentes, **caractérisé en ce que** ledit film (11) est détouré et **en ce que** la pièce (10) ainsi décorée est retirée dudit outillage support.

19. Procédé de gainage de la forme convexe d'une pièce (10) selon l'une des revendications 1 à 13, **caractérisé en ce que** ladite pièce (10) est recouverte d'un sac, d'une vessie ou d'une contre-forme rigide ou souple.
